# EUROPEAN PATENT SPECIFICATION

(11) **EP 3 628 644 B1**
(45) Date of publication and mention of the grant of the patent: **12.11.2025**
(21) Application number: 19199621.4
(22) Date of filing: 25.09.2019
(51) Int. Cl.: C01G 19/02, C01G 30/00, C08K 3/22, C08K 9/02

(54) **FILLER AND POLYMERIC COMPOSITIONS CONTAINING SAME**
FÜLLSTOFF UND DIESER ENTHALTENDE POLYMERZUSAMMENSETZUNGEN
CHARGE ET COMPOSITIONS DE POLYMERES LA CONTENANT

(30) Priority: 25.09.2018 IT 201800008893
(43) Date of publication of application: 01.04.2020
(73) Proprietor: GUARNIFLON S.P.A., 20135 Milano (IT)
(72) Inventor: MARCORA, Giovanni, I-24060 Castelli Calepio, BERGAMO (IT); FARIMBELLA, Alberto, I-24060 Castelli Calepio, BERGAMO (IT)
(74) Representative: M. Zardi & Co S.A.

(56) References cited:
- US-A- 5 995 796
- US-A1- 2005 137 308
- US-A1- 2006 134 419
- US-A1- 2007 026 171

## Description

The present invention relates to a filler and to the use thereof in obtaining compounds of at least a fluoropolymer.

The present invention further relates to a composition in powder or in pellet comprising said filler and at least one fluoropolymer as defined in the enclosed claims.

The present invention further relates to a semi-finished or finished product consisting at least in part of the composition comprising said filler and at least one fluoropolymer.

### Background art

Polytetrafluoroethylene (PTFE) is a polymer originated from the polymerization of tetrafluoroethylene which possesses a series of desirable features both from the chemical and the chemical-physical point of view. By way of example, it shows a high chemical inertia and heat resistance, excellent dielectric features, excellent resistance to aging and a low friction coefficient associated with self-lubricating features.

Said features are not optimal for some specific applications. For this reason, it is known in the art to resort to PTFE compounds in which the features are modified by physical introduction into the polymer matrix of suitable additives, referred to as fillers or bulking agents. Among these, the most commonly used are glass fibers, carbon, graphite, bronze, steel, other polymers, or mixtures thereof.

The choice of the filler and the added amount define compressive strength, wear resistance, thermal expansion coefficient, hardness, surface resistance and volume and surface resistivity.

One of the fields in which PTFE compounds are widely used is the internal coating of pipes, fittings, valve bodies and containers that are used for pharmaceutical and food applications. Said coatings are required by specific field needs of chemical, thermal resistance and low porosity, as well as anti-static performance, preserving the safety and long-life requirements of the products.

The currently used bulking agents are not sufficiently performing for these applications.

One of the currently available solutions includes adding conductive carbons to PTFE, to make the PTFE anti-static. The drawback is that the conductive carbons used as fillers make the final product black in color and, as such, not accepted by the market, considering the regulations limiting the amount of carbon allowed within compounds coming into direct contact with food.

The need to have PTFE compounds with the chemical and thermal resistance features required by the pharmaceutical/food field is strongly felt, without introducing the drawbacks associated with the use of PTFE compounds comprising conductive carbons.

US 5995796 describes a film component having a) a haloelastomer with halogenated monomers, polyorganosiloxane monomers, or both halogenated and polyorganosiloxane monomers, and b) a doped metal oxide, preferably antimony doped tin oxide, dispersed therein.

US 20050137308 describes a non-stick coating including fluoropolymer and electrically conductive mica. The coating may be used on rollers in printing machines to help dissipate static electricity.

### Description of the invention

The present invention relates to the use of a filler in obtaining compounds of at least a fluoropolymer, wherein said filler has been shown to lead to obtain compounds of at least a fluoropolymer of light gray color, both when said compounds of at least a fluoropolymer are in powder or in pellet and in the finished product, keeping unchanged the chemical and thermal resistance features of the product, where said compounds of at least a fluoropolymer polymer achieve suitable electrical features to ensure their anti-static nature and compatibility to direct contact with food according to the regulations 21 CFR FDA 177.1550 and EU 10/2011.

The present invention further relates to a composition in powder or in pellet comprising said filler and at least one fluoropolymer.

The present invention further relates to a semi-finished or finished product consisting at least in part of the composition comprising said filler and at least one fluoropolymer.

For example, said semi-finished or finished product is a coating or a shaped material.

### Description of the Drawings

Figures 1 and 1B: FT-IR analysis (infrared spectroscopy) of the filler according to the present invention;
Figure 2: particle size distribution curve of the filler of the invention;
Figure 3: schematic representation of the morphological structure of the filler according to the invention;
Figure 4: SEM picture of the filler of the invention according to a particular embodiment;
Figure 5: SEM picture of the filler of the invention according to a different particular embodiment;
Figure 6: particle size distribution curve of a second embodiment of the filler of the invention;
Figure 7: particle size distribution curve of a third embodiment of the filler of the invention.

### Detailed description of the invention

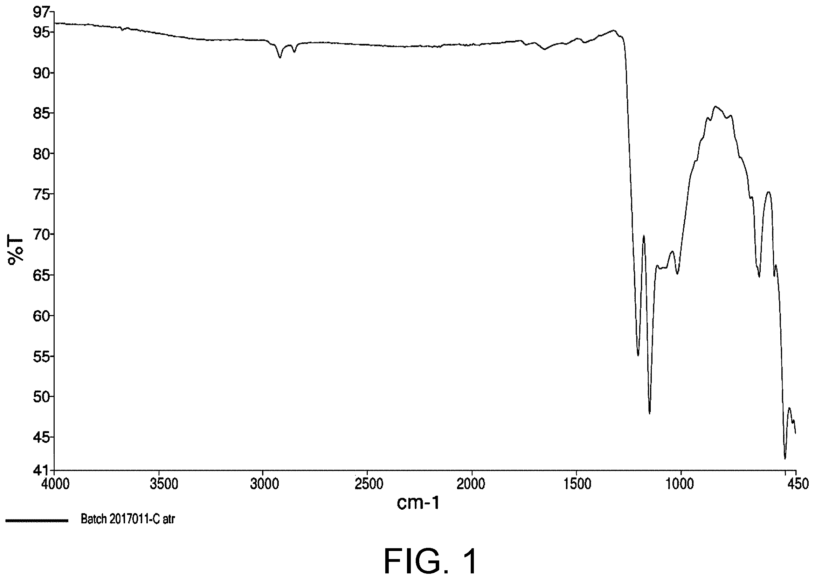

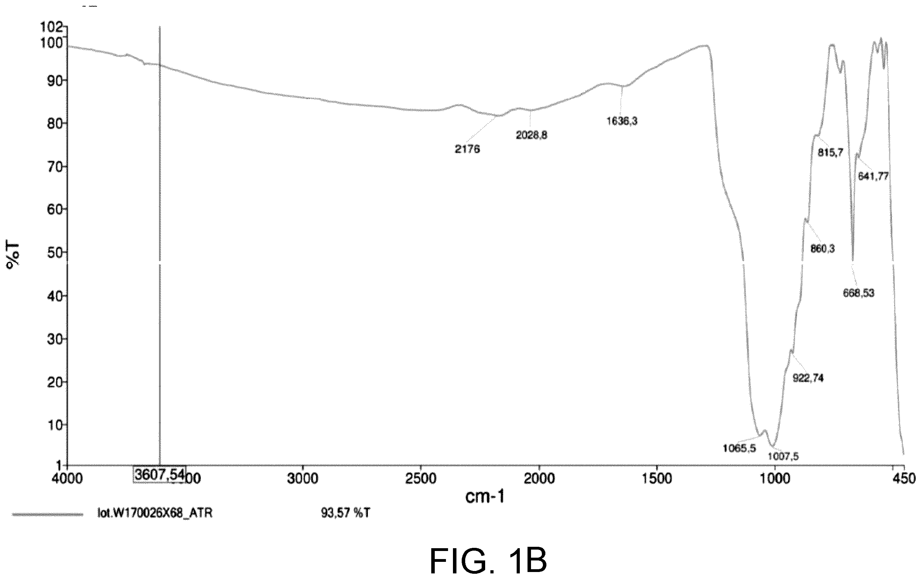

The filler the use of which is the subject of the present invention is a mineral, and comprises a substrate coated with a tin oxide comprising antimony. For example, said filler is characterized by the FT-IR spectrum in Figure 1 and Figure 1B.

For the purpose of the present invention, the term filler is used to define a bulking agent for a polymer, specifically a fluoropolymer.

The FT-IR spectrum in Figures 1 and 1B was obtained on the filler in the form of a powder with the Spectrum One instrument from Perkin Elmer Serial No. 67979 according to the following conditions: in ATR for 16 scans at 80 force gauges (pressure) with a conical tip using a small sample holder plate with reduced hole.

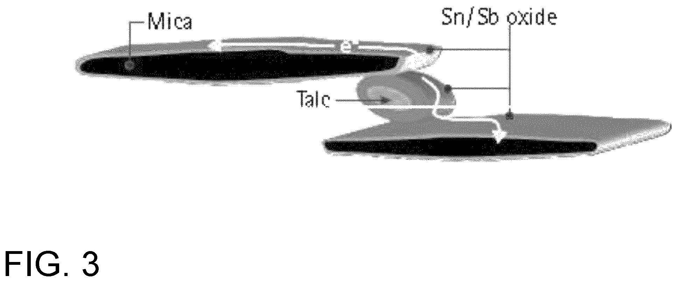

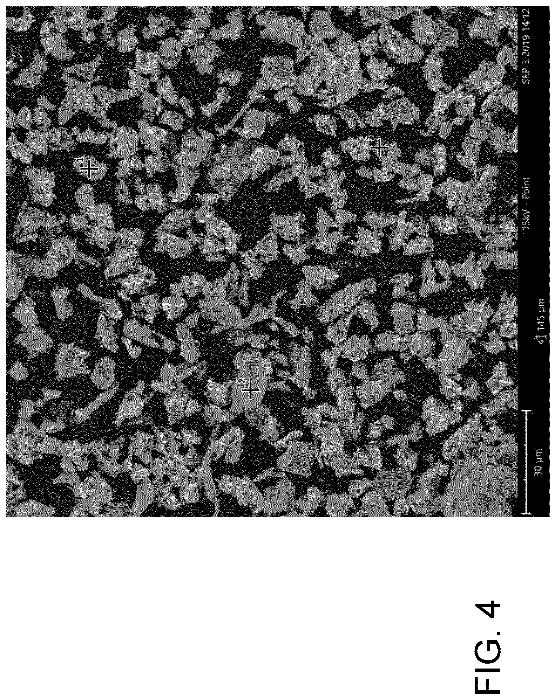

In some embodiments, the filler of the present invention is a fine particle sized Mica- and Talc-based mineral substrate, with both planar and spherical morphology, coated with an antimony-doped tin dioxide (Sn/Sb)O₂-based mineral layer (grey color), with a tetragonal structure, with prismatic crystals, at least partially twinned and which favors the features of electrical dissipation. The static-dissipative functionalities of the filler are based not only on the chemical-physical features of the conductive layer, but also on the morphology of the particles as shown in Figure 3 and in the SEM image in Figure 4.

Preferably, said filler, hereinafter referred to as MgSiEC, comprises an amount of 3MgO*6SiO₂*H₂O (Magnesium silicate hydrate/SiO₂) equal to 60-80% by weight and an amount of (Sn/Sb)O₂ equal to 20-40% by weight.

Preferably, the filler MgSiEC has a particle size between 1 micron and 20 microns, with a particle volume percentage below 1 micron less than 6% and with a distribution curve mode between 5 and 8 microns.

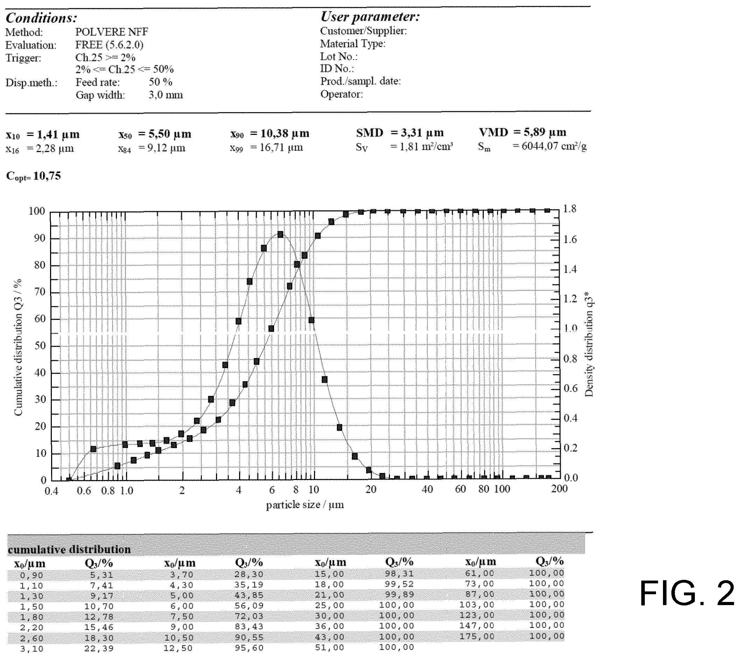

A preferred example of the particle size distribution of the filler of the invention is shown in Figure 2.

The filler particle size analysis was performed with the Sympatec HELOS/KR multi range instrument, using the RODOS/M dispersion system (6.0 mm injector, primary pressure 2.0 Bar), the R3 lens and the FREE processing method.

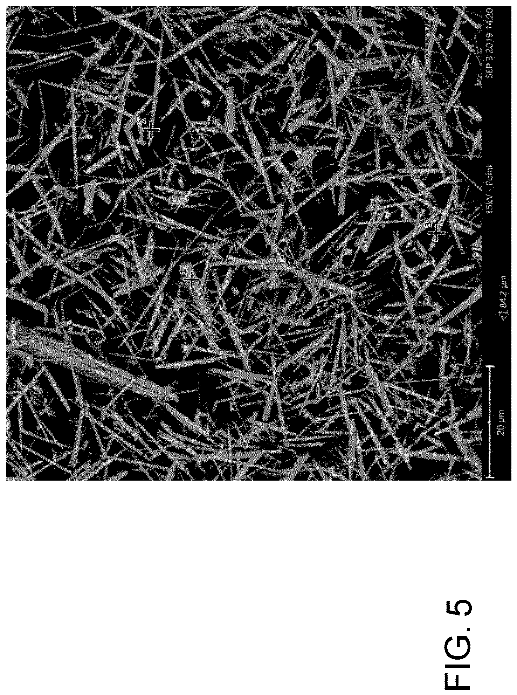

In some embodiments, the filler of the invention is a micron particle sized titanium dioxide-based mineral substrate, coated with an antimony-doped tin dioxide (Sn/Sb)O₂-based mineral layer (grey color), having needle-shaped morphology crystals, as shown in Figure 5. The needle-shaped crystals have a length between about 4 and 5.5 micron and a width between 0.25 and 0.30 microns, the (Sn/Sb)O₂ layer having a thickness of about 3 nm.

The SEM images in Figures 4 and 5 were obtained with Phenom XL Desktop SEM instrument, at 15kV with point intensity, 1850x magnification, in low vacuum (1 Pa).

Preferably, said filler, hereinafter referred to as TiO₂EC, comprises an amount of titanium dioxide between 70% and 80% by weight and (Sn/Sb)O₂ from 20% to 30% by weight.

Preferably, the filler TiO₂EC has a particle size between 0.5 microns and 25 microns, with a particle volume percentage below 1 micron between 20% and 25% and with a bi-modal distribution curve having a main mode between 1 and 2 microns and a secondary mode between 6 and 8 microns.

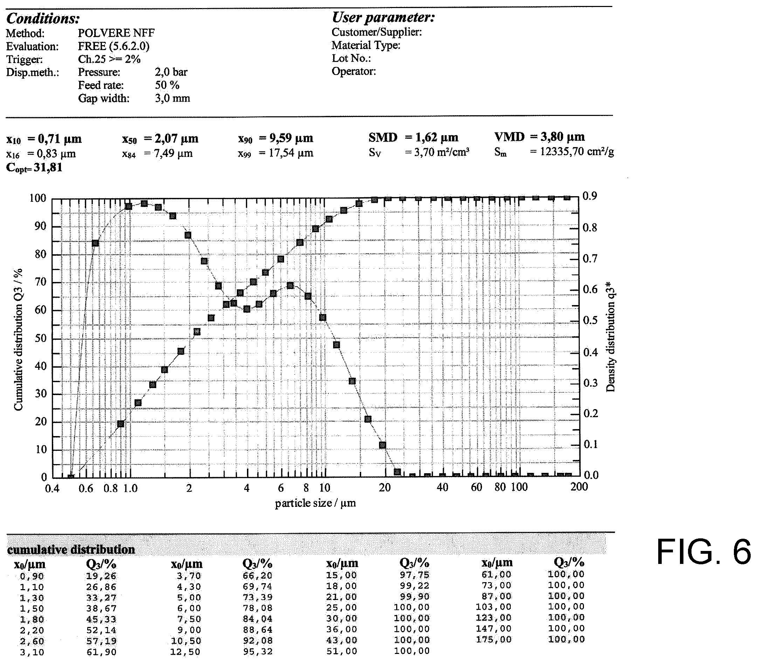

A preferred example of particle size distribution of the filler of the invention is shown in Figure 6.

The filler particle size analysis was performed with the Sympatec HELOS/KR multi range instrument, using the RODOS/M dispersion system (6.0 mm injector, primary pressure 2.0 Bar), the R3 lens and the FREE processing method.

In other embodiments, the filler of the invention is a micron particle sized titanium dioxide-based mineral substrate, coated with an intermediate layer of silicon dioxide and with an antimony-doped tin dioxide (Sn/Sb)O₂-based surface layer (grey color), having spherical morphology crystals.

Preferably, said filler, hereinafter referred to as TiO₂SF, comprises an amount of titanium dioxide between 70% and 80% by weight and (Sn/Sb)O₂ from 20% to 30% by weight.

Preferably, the filler TiO₂SF has a particle size between 0.5 microns and 15 microns, with a particle volume percentage below 1 micron between 15% and 20% and with a bi-modal distribution curve having a main mode between 5 and 7 microns and a secondary mode between 0.6 and 1 microns.

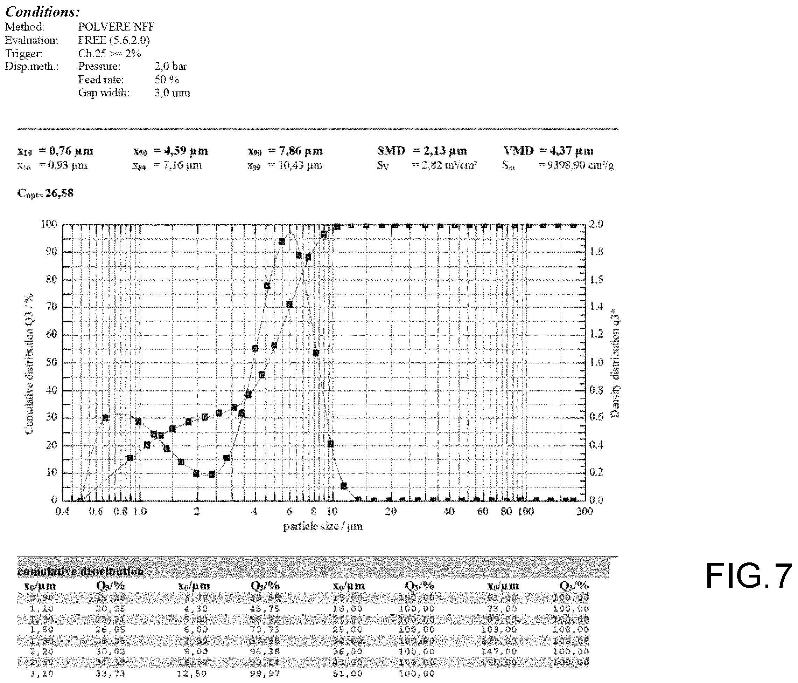

A preferred example of particle size distribution of the filler of the invention is shown in Figure 7.

The filler particle size analysis was performed with the Sympatec HELOS/KR multi range instrument, using the RODOS/M dispersion system (6.0 mm injector, primary pressure 2.0 Bar), the R3 lens and the FREE processing method.

The fillers of the invention can be produced according to technologies known to those skilled in the art, such as those described in EP 0 139 557.

In some embodiments, the filler may undergo a thermal treatment at a temperature higher than 300°C for a time of at least 1 hour, preferably at a temperature higher than 500°C for a time of at least 2 hours, even more preferably at about 600°C for about 4 hours. The treatment can be carried out, for example, in a static oven with forced ventilation.

The composition in powder or in pellet of the present invention comprises said filler or a mixture of said fillers and at least one fluoropolymer. The mixture of fillers, if used, may comprise the fillers at a variable weight ratio between 0.5:1 and 1.5:1, preferably at a 1:1 ratio.

According to an embodiment, the fluoropolymer is a "non-thermoprocessable" fluoropolymer.

According to a further embodiment, the fluoropolymer is a "thermoprocessable" fluoropolymer.

As regards the definition of the term "thermoprocessable" according to the present description, the publications "Fluoroplastics - The definitive user's guide and data book" (Plastics Design Library), second edition, by the author Sina Ebnesajjad and published by Elsevier, distinguish tetrafluoroethylene-based polymers in two types: volume 1 concerns the so-called "non-melt processable fluoropolymers", polymers with so high melt viscosity to prevent hot transformations, while volume 2 concerns thermoprocessable polymers ("melt processable fluoropolymers") which, on the contrary, - purely by way of example - can be hot injected or extruded due to their lower melt viscosity.

Therefore, the polymers of relevance to the "non-thermoprocessable" embodiment are the fluoropolymers listed in volume 1 of the aforementioned manual, by way of example, PTFE.

The polymers of relevance to the "thermoprocessable" embodiment are the fluoropolymers listed in volume 2 of the aforementioned manual, by way of example, PVDF, ETFE, ECTFE, PCTFE, FEP, MFA and PFA.

According to an embodiment, the fluoropolymer comprises or consists of polytetrafluoroethylene (PTFE), for example virgin PTFE. According to further embodiments, the fluoropolymer is in the form of a homopolymer of tetrafluoroethylene (TFE), or in the form of a copolymer comprising TFE monomer and one or more further fluorinated monomers, preferably in amounts equal to or less than 1% by weight with respect to the total weight of TFE (modified PTFE). Examples of such polymers can be copolymers of tetrafluoroethylene (TFE)-perfluoroalkyl vinyl ether (FVE) wherein the number of carbon atoms of FVE is between 1 and 5 or copolymers TFE-hexafluoropropylene (HPF)-FVE. In a preferred embodiment, said fluoropolymer is virgin PTFE homopolymer, or modified PTFE. According to a preferred embodiment, the fluoropolymer is present in the formulation in the form of a powder.

According to an embodiment, the fluoropolymer is PTFE powder.

It should be noted that, unless otherwise specified, the percentages indicated in this specification are percentages by weight (% wt).

It should be noted that, in the composition in powder or in pellet of the present invention, additional bulking agents may also be present with respect to disclosed filler, of an organic and/or inorganic type, mixed in said formulation. By way of example, silica, carbon, reinforcing particles or fibers, carbon particles or fibers, MoS₂, calcium silicate optionally of a mineral nature (Wollastonite), titanium dioxide, alumina, barium sulfate, graphite, coloring pigments, poly-imide, cyclic polyesters, for example EKONOL^{®}, polyether ether ketone, for example PEEK^{®}, polyparaphenylene sulfide (PPS), polypropylene sulfone (PPSO₂), or mixtures thereof.

In said composition in powder or in pellet said fluoropolymer is present in a percentage by weight between 70 and 90%wt, even more preferably between 75 and 85%wt and said filler or mixture of fillers is present in a percentage by weight between 10 and 30%wt, even more preferably between 15 and 25%wt.

Preferably, said composition in powder or in pellet further comprises titanium dioxide, preferably in concentration between 0.5% and 5% by weight.

By way of example, said composition in powder or in pellet comprises, by weight: virgin PTFE homopolymer 78.0%, filler 20.0%, titanium dioxide 2.0%.

With regard to the application field of the present invention, the composition, the coating or the shaped material may form at least part of the inner lining of ducts, pipes and fittings which are produced by compression molding or isostatic molding as well as both dry and in-paste extruded pipes and peeled strips. Moreover, said composition, coating or shaped material may form at least part of gaskets, such as envelope gaskets, bellows and all the fittings to complete the internal linings of simple items such as pipes or more complex items like valve bodies and pumps.

Said manufactured items are able to dissipate the accumulation of electrostatic charges superficially developing by rubbing with a fluid or a solid in dynamic applications.

The purpose of the present invention will now be illustrated on the basis of some non-limiting examples:

### Example 1: sample preparation.

With the dry mixing technique, five compositions were prepared using the following recipes:

### Recipe No.1

75.0%wt virgin PTFE homopolymer, grade: Algoflon F7 batch: SG1177 (drum 79)
25.0% filler MgSiEC

### Recipe No.2

90.0% virgin PTFE homopolymer, grade: Algoflon F7 batch: SG1177 (drum 79)
10.0% filler MgSiEC

### Recipe No.3

78.0% virgin PTFE homopolymer, grade: Algoflon F7 batch: SG1177 (drum 79)
20.0% filler MgSiEC
2.0% Titanium Dioxide, grade: R105

### Recipe No. 4

80.0%wt virgin PTFE homopolymer, grade: Algoflon F7 batch: SG1177 (drum 79)
20.0% filler TiO₂EC

### Recipe No. 5

80.0%wt virgin PTFE homopolymer, grade: Algoflon F7 batch: SG1177 (drum 79)
20.0% filler TiO₂SF.

The following semi-finished products were formed from the samples thus formed. For convenience, the samples shown below with references No. 1, No. 2, No. 3, No. 4 and No. 5 correspond to the compositions No. 1-5 contained therein.

It should be noted that the semi-finished products of the Examples are specific examples of shaped materials obtainable according to the present invention.

### Example 2: analysis of the samples of Example 1.

With the compositions No. 1-5, semi-finished products in the form of a round were prepared (diameter = 50 mm; height = 50 mm), by a forming process comprising a preforming step and a sintering step. In particular, an OMCN 50 Tons hydraulic press was used, at a maximum pressure of 500 Kg/cm² (300 Kg/cm² for recipe No. 2) following the reference standard ASTM D4894. The subsequent sintering was carried out in a static oven according to the sintering cycle "01 Lab" at a maximum temperature of 370°C.

Said rounds were "peeled" in the form of films for the characterization of the sample.

The analyses carried out on each type of sample were the following:
A. Visual analysis
B. Gravimetric analysis (density)
C. Mechanical analyses
D. Resistivity measurement

### 2.A Visual analysis

The peeled strips obtained are smooth to the touch and the color tone is that of RAL 7038 (agate gray) for recipes No. 1 and No. 2, while it is that of RAL 9018 (white papyrus) for recipe No. 3.

The data reported indicate that the desired colorimetric target, *i.e.* white papyrus, is obtained only in the presence of the filler and additional additives.

### 2.B Gravimetric analysis (apparent density and density)

Measurements of the apparent density (bulk density) of the powder are carried out with ASTM stainless steel kits and with a 250 ml beaker according to the ASTM D1895 standard. A hydrostatic balance is used to measure the density of the three semi-finished products according to the ASTM D792 standard. The data shown in the Tables below are comparable in absolute terms. For comparison, a sample is included consisting of PTFE and conductive carbon (virgin PTFE homopolymer 98.0%wt, grade Algoflon F7, batch SG1177 (drum 79) + conductive carbon 2.0%wt grade Printex F80, batch 1180125).

| **Feature** | **method** | **Unit of measure** | **Sample 1** | **Sample 2** | **Sample 3** | **Composition comprising conductive carbon** |
|---|---|---|---|---|---|---|
| Bulk density | ASTM D1895 | g/L | 501 | 463 | 518 | 400 |
| Density | ASTM D792 | g/cm³ | 2.181 | 2.234 | 2.247 | 2.145 |

| **Feature** | **method** | **Unit of measure** | **Sample 4** | **Sample 5** | **Composition comprising conductive carbon** |
|---|---|---|---|---|---|
| Bulk density | ASTM D1895 | g/L | 570 | 610 | 400 |
| Density | ASTM D792 | g/cm³ | 2.278 | 2.312 | 2.145 |

### 2.C Mechanical analyses

The semi-finished products were prepared in the form of a 1 mm thick sample in accordance with the ASTM D4894 standard. Measurements were conducted using an INSTRON 3365 dynamometer.

| **Feature** | **method** | **Unit of measure** | **Sample 1** | **Sample 2** | **Sample 3** | **Composition comprising conductive carbon** |
|---|---|---|---|---|---|---|
| Tensile strength | ASTM D4894 | MPa | 10.5 | 26.8 | 28.9 | 35.5 |
| Elongation at break | ASTM D4894 | % | 98 | 297 | 127 | 325 |

| **Feature** | **method** | **Unit of measure** | **Sample 4** | **Sample 5** | **Composition comprising conductive carbon** |
|---|---|---|---|---|---|
| Tensile strength | ASTM D4894 | MPa | 12.5 | 17.4 | 35.5 |
| Elongation at break | ASTM D4894 | % | 82 | 195 | 325 |

From the Tables above it can be observed that the mechanical features of sample 2, as far as elongation at break is concerned, are clearly better than those of sample 1 and 3. For comparison, a sample has been included consisting of PTFE and conductive carbon (
virgin PTFE homopolymer 98.0%wt, grade Algoflon F7, batch SG1177 (drum 79) + conductive carbon 2.0%wt grade Printex F80, batch 1180125)

### 2.D Resistivity measurement

Measurements of surface and volume resistivity were performed with the Gigalab 2 instrument, instrument code Guarniflon SL51 according to the ASTM D257 standard, with a voltage of 500 V. The results obtained are reported in the following Tables and have been compared with the sample consisting of PTFE and conductive carbon (virgin PTFE homopolymer 98.0%wt, grade Algoflon F7, batch SG1177 (drum 79) + conductive carbon 2.0%wt grade Printex F80, batch 1180125).

| **Feature** | **method** | **Unit of measure** | **Sample 1** | **Sample 2** | **Sample 3** | **Composition comprising conductive carbon** |
|---|---|---|---|---|---|---|
| Surface resistivity | ASTM D257 | Ohm | < 1.0 * 10⁶ | 500 * 10⁹ | 1.3 * 10⁶ | < 1.0 * 10⁶ |
| Volume resistivity | ASTM D257 | Ohm. cm | 8.0 * 10⁶ | >1.0 * 10¹² | 8.0 * 10⁶ | < 1.0 * 10⁶ |

| **Feature** | **method** | **Unit of measure** | **Sample 4** | **Sample 5** | **Composition comprising conductive carbon** |
|---|---|---|---|---|---|
| Surface resistivity | ASTM D257 | Ohm | < 1.0 * 10⁶ | < 1.0 * 10⁶ | < 1.0 * 10⁶ |
| Volume resistivity | ASTM D257 | Ohm. cm | < 1.0 * 10⁶ | < 1.0 * 10⁶ | < 1.0 * 10⁶ |

The unsatisfactory results reported for sample 2, show that low percentages of the filler, ≤ 10.0%, are not sufficient to obtain a conductivity such as to consider the sample as anti-static.

Overall, the data obtained from the above tests show that, increasing the filler concentrations in the sample according to the present invention, a higher conductibility is obtained at the expense of the mechanical features.

The data, shown with reference to Recipe No. 7 in the following Examples, show that, exceeded the filler amount of 25.0%, the anti-static improvements become negligible while the mechanical properties deteriorate. A percentage of TiO₂ 2.0% is sufficient to obtain the desired color, without significantly impacting the properties of the product itself.

Compositions comprising TiO₂ up to 10.0% were also tested, noting a colorimetric improving without an impact on the remaining features.

Surprisingly, only the filler according to the present invention proved to be suitable for achieving the objectives, whereas different fillers, albeit with similar features as Color Index and chemical composition, do not ensure the achievement of the minimum dielectric properties for the purpose.

### Example 3: product analysis

Additional samples were prepared with the following recipes:

### Mixture No.2017011/D Recipe No. 6

95.0% virgin PTFE homopolymer, grade: Algoflon F7 batch: SG1177 (drum 79)
5.0% filler MgSiEC

### Mixture No.2017011/E Recipe No. 7

60.0% virgin PTFE homopolymer, grade: Algoflon F7 batch: SG1177 (drum 79)
40.0% filler MgSiEC

### Mixture No.2017011/H Recipe No.8 (comparative)

80.0% virgin PTFE homopolymer, grade: Algoflon F7 batch: SG1177(drum 79)
20.0% filler Sachtolith L

As shown in the following Tables, for the same composition and process for obtaining the samples, the presence in sample No. 8 of a filler which is not the filler according to the present invention causes that said sample does not reach the minimum performance in terms of anti-static needs required to the solution according to the present invention.

### Mixture No.2017011/K Recipe No. 9

78.0% virgin PTFE homopolymer, grade: Algoflon F7 batch: SG1177 (drum 79)
20.0% filler MgSiEC
1.6% Titanium Dioxide, grade: R105
0.4% ZnS

### Mixture No.2017011/F Recipe No. 10

79,8% virgin PTFE homopolymer, grade: Algoflon F7 batch: SG1177 (drum 79)
20.0% filler MgSiEC
0.2% Titanium Dioxide, grade: R105

### Mixture No.2017011/G Recipe No. 11

70.0% virgin PTFE homopolymer, grade: Algoflon F7 batch: SG1177 (drum 79)
20.0% filler MgSiEC
10% Titanium Dioxide, grade: R105

### Mixture No.2017011/I Recipe No. 12

79.8% modified virgin PTFE, grade: PTFE TFM 1700 batch: 4000089477
20.0% filler MgSiEC
0.2% Titanium Dioxide, grade: R105

### Mixture No.2017011/J Recipe No. 13

70.0% modified virgin PTFE, grade: PTFE TFM1700 batch: 4000089477
20.0% filler MgSiEC
10.0% Titanium Dioxide, grade: R105

### Recipe No.14

78.0% virgin PTFE homopolymer, grade: PTFE TF1750 batch: 2728349
20.0% filler MgSiEC
2.0% Titanium Dioxide, grade: R105

### Recipe No.15

78.0% modified virgin PTFE, grade: PTFE TFM1700 batch: 4000091954
20.0% filler MgSiEC
2.0% Titanium Dioxide, grade: R105

With compositions 14 e 15 a pellet was obtained in a process involving the following essential steps:
Adding the solvent (from 20% to 40% by weight, preferably 32% by weight) to the dry mixture of the different ingredients, processing of the resulting paste by a spheronizer plate, evaporating and cooking pellets in a static oven, final screening.

The features of the products are shown in the following Tables:

| **Property** | **Unit of measure** | **Sample 1** | **Sample 2** | **Sample 3** |
|---|---|---|---|---|
| | | | | |
| Apparent density | g/L | 501 | 463 | 518 |
| | | | | |
| Specific weight | g/cm³ | 2.181 | 2.234 | 2.247 |
| Load at break | MPa | 10.5 | 26.8 | 13.3 |
| Elongation at break | % | 98 | 297 | 127 |
| Diametral shrinkage | % | 2.8 | 3.9 | 3.4 |
| | | | | |
| Surface resistivity (Labeohm) | Ohm | < 10⁵ | >10¹² | < 10⁷ |
| Surface resistivity (Gigalab - 500V) | Ohm | < 1.0 MΩ | 500 * 10⁹ | 1.3 MΩ |
| Volume resistivity (Gigalab - 500V) | Ohm. cm | < 1.0 MΩ | > 1.0 TΩ | 8.0 MΩ |
| | | | | |
| Color *L (D65/8, SCI) | - | - | - | - |

| **Property** | **Unit of measure** | **Sample 5** | **Sample 4** |
|---|---|---|---|
| | | | |
| Apparent density | g/L | 610 | 570 |
| | | | |
| Specific weight | g/cm³ | 2.312 | 2.278 |
| Load at break | MPa | 17.4 | 12.5 |
| Elongation at break | % | 195 | 82 |
| Diametral shrinkage | % | 3.8 | 2.3 |
| | | | |
| Surface resistivity (Labeohm) | Ohm | < 10⁷ | < 105 |
| Surface resistivity (Gigalab - 500V) | Ohm | < 1.0*10⁶ | < 1.0*10⁶ |
| Volume resistivity (Gigalab - 500V) | Ohm. cm | < 1.0*10⁶ | < 1.0*10⁶ |
| | | | |
| Color *L (D65/8, SCI) | - | 80.6 | 83.1 |

| **Property** | **Unit of measure** | **Sample 6** | **Sample 7** |
|---|---|---|---|
| | | | |
| Apparent density | g/L | 536 | 512 |
| | | | |
| Specific weight | g/cm³ | 2.197 | 1.776 |
| Load at break | MPa | 33.9 | 2.1 |
| Elongation at break | % | 321 | 9 |
| Diametral shrinkage | % | 3.1 | 0.8 |
| | | | |
| Surface resistivity (Labeohm) | Ohm | > 10¹² | < 10⁵ |
| Surface resistivity (Gigalab - 500V) | Ohm | 285.0 GΩ | < 1.0 MΩ |
| Volume resistivity (Gigalab - 500V) | Ohm. cm | > 1.0 TΩ | < 1.0 MΩ |
| | | | |
| Color *L (D65/8, SCI) | - | 75.2 | 81.0 |

| **Property** | **Unit of measure** | **Sample 8** | **Sample 9** |
|---|---|---|---|
| | | | |
| Apparent density | g/L | 508 | 503 |
| | | | |
| Specific weight | g/cm³ | 2.373 | 2.272 |
| Load at break | MPa | 15.9 | 10.8 |
| Elongation at break | % | 193 | 95 |
| Diametral shrinkage | % | 3.1 | 4.1 |
| | | | |
| Surface resistivity (Labeohm) | Ohm | > 10¹² | <10⁷ |
| Surface resistivity (Gigalab - 500V) | Ohm | > 50.0 GΩ | < 1.0 MΩ |
| Volume resistivity (Gigalab - 500V) | Ohm.cm | > 50.0 GΩ | < 1.0 MΩ |
| | | | |
| Color *L (D65/8, SCI) | - | 98.3 | 82.7 |

| **Property** | **Unit of measure** | **Sample 10** | **Sample 11** | **Sample 12** | **Sample 13** |
|---|---|---|---|---|---|
| | | | | | |
| Apparent density | g/L | 531 | 549 | 471 | 492 |
| | | | | | |
| Specific weight | g/cm³ | 2.221 | 2.269 | 2.291 | 2.333 |
| Load at break | MPa | 11.8 | 7.6 | 11.2 | 8.9 |
| Elongation at break | % | 99 | 41 | 113 | 12 |
| Diametral shrinkage | % | 3.7 | 3.7 | 5.5 | 4.9 |
| | | | | | |
| Surface resistivity (Labeohm) | Ohm | < 10⁷ | >10⁸ | < 10⁷ | < 10⁷ |
| Surface resistivity (Gigalab - 500V) | Ohm | < 1.0 MΩ | 3.8 MΩ | < 1.0 MΩ | < 1.0 MΩ |
| Volume resistivity (Gigalab - 500V) | Ohm. cm | < 1.0 MΩ | < 1.0 MΩ | < 1.0 MΩ | 6.2 MΩ |
| | | | | | |
| Color *L (D65/8, SCI) | - | 78.2 | 90.0 | 72.5 | 89.2 |

| **Property** | **Unit of measure** | **Sample 14** | **Sample 15** |
|---|---|---|---|
| | | | |
| Apparent Density | g/L | 739 | 767 |
| Particle size (average diameter) | µm | 563.0 | 610.0 |
| Flow | sec/50g | 2.1 | 2.3 |
| | | | |
| Specific weight | g/cm³ | 2.279 | 2.283 |
| Load at break | MPa | 10.4 | 12.0 |
| Elongation at break | % | 23 | 5 |
| Diametral shrinkage | % | 2.2 | 5.5 |
| | | | |
| Surface resistivity (Labeohm) | Ohm | <10⁷ | <10⁷ |
| Surface resistivity (Gigalab - 500V) | Ohm | < 1.0 MΩ | < 1.0 MΩ |
| Volume resistivity (Gigalab - 500V) | Ohm.cm | < 1.0 MΩ | < 1.0 MΩ |
| | | | |
| Color *L (D65/8, SCI) | - | 82.4 | 82.6 |

Measurements were carried out, unless otherwise indicated, using the same tests reported in Example 2. The data obtained with the products indicated by No. 14 and 15 show that the compositions can be granulated, leading to a morphologically good grain and with the desired average size.

The specific weight, as well as the anti-static features and the final color of the product remain substantially unchanged.

The mechanical features, and in particular the elongation, are significantly depressed; however, the effect is in-line with what happens for many other types of PTFE-based compounds with similar bulking agent amount.

The results shown for sample 14, where the used base is virgin PTFE homopolymer, are better than those observed for sample 15, where the base is modified virgin PTFE. Further experiments were carried out using the fillers TiO₂EC and TiO₂SF, alone or in mixture.

The measurements were carried out according to the methods described above.

The results are shown below.

### Recipe No. 16

90.0% virgin PTFE homopolymer, grade: Algoflon F7 batch: SG1177 (drum 79)
10.0% filler TiO₂EC

### Recipe No. 17

85.0% virgin PTFE homopolymer, grade: Algoflon F7 batch: SG1177 (drum 79)
15.0% filler TiO₂EC

### Recipe No. 18

80.0% virgin PTFE homopolymer, grade: Algoflon F7 batch: SG1177 (drum 79)
20.0% filler TiO₂SF (treated)

Such filler has the same composition of the filler used in Recipe No. 5, but underwent a static oven treatment with forced ventilation at the temperature of 600°C for 4 hours, on a powder layer between 3 and 5 cm.

### Recipe No. 19

80.0% virgin PTFE homopolymer, grade: Algoflon F7 batch: SG1177 (drum 79)
10.0% filler TiO₂EC
10.0% filler TiO₂SF (treated as in Recipe No. 18).

| ***Property*/*sample*** | ***Unit*** | ***Recipe No.16*** | ***Recipe No.17*** |
|---|---|---|---|
| | | | |
| *Recipe* | - | 10.0% TiO₂EC | 15.0% TiO₂EC |
| | | | |
| *Apparent density* | g/L | - | - |
| | | | |
| *Specific weight* | g/cm³ | 2.249 | 2.282 |
| *Load at break* | MPa | 27.1 | 18.8 |
| *Elongation at break* | % | 285 | 211 |
| *Diametral shrinkage* | % | 2.7 | 2.1 |
| | | | |
| *Surface resistivity (Labeohm)* | Ohm | > 10¹² | < 10⁷ |
| *Surface resistivity (Gigalab - 500V)* | Ohm | > 1.0 TΩ | < 1.0 MΩ |
| *Volume resistivity (Gigalab - 500V)* | Ohm.cm | < 1.0 MΩ | < 1.0 MΩ |
| | | | |
| *Color *L (D65*/*8, SCI)* | - | 83.8 | 83.8 |

The 10.0% mixture, while showing the best results in terms of mechanical features, is not sufficiently conductive. The best compromise was achieved with the 15.0% by weight TiO₂EC composition with very promising results of dissipation features and certainly positive values of mechanical features.

The color is in no way affected by the added filler amount.

| *Property*/*sample* | *Unit* | *Recipe No.5* | *Recipe No.18* |
|---|---|---|---|
| | | | |
| *Recipe* | - | 20.0% TiO₂SF | 20.0% treated TiO₂SF 600°C x 4h |
| | | | |
| *Apparent density* | g/L | 610 | - |
| | | | |
| *Specific weight* | g/cm³ | 2.312 | 2.273 |
| *Load at break* | MPa | 17.4 | 18.3 |
| *Elongation at break* | % | 195 | 233 |
| *Diametral shrinkage* | % | 3.8 | 3.6 |
| | | | |
| *Surface resistivity (Labeohm)* | Ohm | < 10⁷ | < 10⁶ |
| *Surface resistivity (Gigalab - 500V)* | Ohm | < 1.0 MΩ | < 1.0 MΩ |
| *Volume resistivity (Gigalab - 500V)* | Ohm.cm | < 1.0 MΩ | < 1.0 MΩ |
| | | | |
| *Color *L (D65*/*8, SCI)* | - | 80.6 | 81.0 |

The thermal treatment carried out on the filler allows to solve the problem of the onset of fractures and/or cuts in the final product obtained by compression molding and subsequent sintering. On the 1.0 mm thick peeled strip obtained from the 50x50 mm round molded at the maximum pressure of 500 Kg/cm², there is no evidence of cuts and/or fractures.

The mechanical features are further improved, especially as regards the elongation at break.

Even the electrical features have been positively affected by the carried-out heat treatment.

However, the color remains unchanged.

| ***Property*/*sample*** | ***Unit*** | ***Recipe No.5*** | ***Recipe No. 4*** | ***Recipe No.19*** |
|---|---|---|---|---|
| | | | | |
| *Recipe* | - | 20.0% TiO₂SF | 20% TiO₂EC | 10% TiO₂SF (treated) + 10% TiO₂EC |
| | | | | |
| *Apparent density* | g/L | 610 | 570 | - |
| | | | | |
| *Specific weight* | g/cm³ | 2.312 | 2.278 | 2.266 |
| *Load at break* | MPa | 17.4 | 12.5 | 15.1 |
| *Elongation at break* | % | 195 | 82 | 178 |
| *Diametral shrinkage* | % | 3.8 | 2.3 | 2.1 |
| | | | | |
| *Surface resistivity (Labeohm)* | Ohm | < 10⁷ | < 10⁵ | < 10⁶ |
| *Surface resistivity (Gigalab - 500V)* | Ohm | < 1.0 MΩ | < 1.0 MΩ | < 1.0 MΩ |
| *Volume resistivity (Gigalab - 500V)* | Ohm. cm | < 1.0 MΩ | < 1.0 MΩ | < 1.0 MΩ |
| | | | | |
| *Color *L (D65*/*8, SCI)* | - | 80.6 | 83.1 | 84.2 |

In terms of mechanical and electrical features, the mixture of the fillers TiO₂EC and TiO₂SF allows to obtain a good contribution from the performances of both fillers. The resulting outcome is positioned in an intermediate manner both in terms of electrical properties and in terms of mechanical features.

The defects are thus minimized, maximizing the properties of each of them.

## Claims

1. A composition in powder or in pellet comprising at least one fluoropolymer in a percentage by weight between 70%wt and 90%wt and a filler in a percentage by weight between 10%wt and 30%wt, wherein said filler is a mica and talc-based substrate with an antimony-doped tin dioxide (Sn/Sb) O₂-based coating or a titanium dioxide-based substrate with an antimony-doped tin dioxide (Sn/Sb) O₂-based coating or a mixture of said fillers.

2. The composition according to claim 1, wherein the filler is a mica and talc-based substrate with an antimony-doped tin dioxide (Sn/Sb)O₂-based coating **characterized by** the FT-IR spectrum of Fig. 1, wherein said FT-IR spectrum was obtained on the filler in the form of a powder with the Spectrum One instrument from Perkin Elmer Serial No. 67979 according to the following conditions: in ATR for 16 scans at 80 force gauges (pressure) with a conical tip using a small sample holder plate with reduced hole.

3. The composition according to claim 1 or 2, wherein the filler is a mica and talc-based substrate with an antimony-doped tin dioxide (Sn/Sb)O₂-based coating having a particle size between 1 micron and 20 microns, with a particle volume percentage below 1 micron less than 6% and with a distribution curve mode between 5 and 8 microns.

4. The composition according to any one of claims 1 to 3, wherein said filler is a mica and talc-based substrate with an antimony-doped tin dioxide (Sn/Sb) O₂-based coating with both planar and spherical geometry, wherein the (Sn/Sb) O₂-based coating has a tetragonal structure, with prismatic crystals, at least partially twinned.

5. The composition according to claim 4, comprising an amount of 3MgO*6SiO₂*H₂O (Magnesium silicate hydrate/SiO₂) equal to 60-80% by weight and an amount of (Sn/Sb)O₂ equal to 20-40% by weight.

6. The composition according to claim 1, wherein the filler is a titanium dioxide-based substrate with an antimony-doped tin dioxide (Sn/Sb) O₂-based coating having a particle size between 0.5 microns and 25 microns, with a particle volume percentage below 1 micron between 20% and 25%, and with a bi-modal distribution curve having a main mode between 1 and 2 microns and a secondary mode between 6 and 8 microns.

7. The composition according to claim 6, wherein the filler is in the form of needle-shaped morphology crystals, wherein preferably said crystals have a length between about 4 and 5.5 micron and a width between 0.25 and 0.30 microns, the (Sn/Sb)O₂ layer having a thickness of about 3 nm.

8. The composition according to claim 6 or 7, wherein said filler comprises a titanium dioxide amount between 70% and 80% by weight and (Sn/Sb)O₂ from 20% to 30% by weight.

9. The composition according to claim 1, wherein the filler is a micron particle sized titanium dioxide-based mineral substrate, coated with an intermediate layer of silicon dioxide and with an antimony-doped tin dioxide (Sn/Sb)O₂-based surface layer, in the form of spherical morphology crystals.

10. The composition according to claim 9, wherein said filler comprises an amount of titanium dioxide between 70% and 80% by weight and (Sn/Sb)O₂ from 20% to 30% by weight, and preferably has a particle size between 0.5 microns and 15 microns, with a particle volume percentage below 1 micron between 15% and 20% and with a bi-modal distribution curve having a main mode between 5 and 7 microns and a secondary mode between 0.6 and 1 microns.

11. The composition according to any one of claims 1 to 10, wherein the filler underwent a thermal treatment at a temperature of at least 300°C for a time of at least 1 hour.

12. The composition according to any one of claims 1 to 11, wherein said fluoropolymer is a "non-thermoprocessable" fluoropolymer or a "thermoprocessable" fluoropolymer, wherein said thermoprocessable fluoropolymer is preferably selected from the group comprising: PVDF, ETFE, ECTFE, PCTFE, FEP, MFA and PFA, and wherein said "non-thermoprocessable" fluoropolymer preferably comprises or consists of polytetrafluoroethylene (PTFE).

13. The composition according to any one of claims 1 to 11, wherein said fluoropolymer is in the form of a homopolymer of tetrafluoroethylene (TFE), or in the form of a copolymer comprising TFE monomer and one or more further fluorinated monomers, preferably in amounts equal to or less than 1% by weight with respect to the total weight of TFE (modified PTFE).

14. The composition according to any one of claims 1 to 11, wherein said fluoropolymer is in the form of a powder or pelletized powder and/or in the form of pellets.

15. The composition according to any one of claim 1, wherein said fluoropolymer is present in a percentage by weight between 75%wt and 85%wt, and said filler is present in a percentage by weight between 15%wt and 25%wt.

16. A semi-finished or finished product consisting at least in part of a composition according to one of claims 1 to 15 and which preferably may form at least part of the inner lining of ducts, pipes, fittings and gaskets.

## Patentansprüche

1. Zusammensetzung in Pulver- oder in Pelletform, umfassend mindestens ein Fluorpolymer in einem Gewichtsprozentsatz zwischen 70 Gew.-% und 90 Gew.-% und einen Füllstoff in einem Gewichtsprozentsatz zwischen 10 Gew.-% und 30 Gew.-%, wobei der Füllstoff ein Substrat auf der Basis von Glimmer und Talkum mit einer Beschichtung auf der Basis von antimondotiertem Zinndioxid ((Sn/Sb)O₂) oder ein Substrat auf der Basis von Titandioxid mit einer Beschichtung auf der Basis von antimondotiertem Zinndioxid ((Sn/Sb)O₂) oder eine Mischung der Füllstoffe ist.

2. Zusammensetzung nach Anspruch 1, wobei der Füllstoff ein Substrat auf der Basis von Glimmer und Talkum mit einer Beschichtung auf der Basis von antimondotiertem Zinndioxid ((Sn/Sb)O₂) ist, **gekennzeichnet durch** das FT-IR-Spektrum der Fig. 1, wobei das FT-IR-Spektrum an dem Füllstoff in Form eines Pulvers mit dem Spectrum One-Instrument von Perkin Elmer der Serien-Nr. 67979 den folgenden Bedingungen entsprechend erhalten worden ist: in ATR für 16 Scans bei 80 Kraft Gauge (Druck) mit einer konischen Spitze unter Anwendung einer kleinen Probenträgerplatte mit reduziertem Loch.

3. Zusammensetzung nach Anspruch 1 oder 2, wobei der Füllstoff ein Substrat auf der Basis von Glimmer und Talkum mit einer Beschichtung auf der Basis von antimondotiertem Zinndioxid ((Sn/Sb)O₂) ist, die eine Partikelgröße zwischen 1 Mikron und 20 Mikron bei einem Partikelvolumenprozentsatz unter 1 Mikron von weniger als 6 % und bei einem Verteilungskurvenmodus zwischen 5 und 8 Mikron aufweist.

4. Zusammensetzung nach einem der Ansprüche 1 bis 3, wobei der Füllstoff ein Substrat auf der Basis von Glimmer und Talkum mit einer Beschichtung auf der Basis von antimondotiertem Zinndioxid ((Sn/Sb)O₂) mit sowohl planarer als auch kugelförmiger Geometrie ist, wobei die Beschichtung auf der Basis von (Sn/Sb)O₂ eine tetragonale Struktur mit prismatischen Kristallen aufweist, die mindestens teilweise verzwillingt sind.

5. Zusammensetzung nach Anspruch 4, umfassend eine Menge von 3MgO*6SiO₂*H₂O (Magnesiumsilicathydrat/SiO₂) gleich 60-80 Gew.-% und eine Menge von (Sn/Sb)O₂ gleich 20-40 Gew.-%.

6. Zusammensetzung nach Anspruch 1, wobei der Füllstoff ein Substrat auf der Basis von Titandioxid mit einer Beschichtung auf der Basis von antimondotiertem Zinndioxid ((Sn/Sb)O₂) ist, die eine Partikelgröße zwischen 0,5 Mikron und 25 Mikron bei einem Partikelvolumenprozentsatz unter 1 Mikron zwischen 20 % und 25 % und bei einer bimodalen Verteilungskurve, die einen Hauptmodus zwischen 1 und 2 Mikron und einen sekundären Modus zwischen 6 und 8 Mikron aufweist, aufweist.

7. Zusammensetzung nach Anspruch 6, wobei der Füllstoff in Form nadelförmiger Mophologiekristalle vorliegt, wobei die Kristalle bevorzugt eine Länge zwischen etwa 4 und 5,5 Mikron und eine Breite zwischen 0,25 und 0,30 Mikron aufweisen, wobei die (Sn/Sb)O₂-Schicht eine Dicke von etwa 3 nm aufweist.

8. Zusammensetzung nach Anspruch 6 oder 7, wobei der Füllstoff eine Titandioxidmenge zwischen 70 und 80 Gew.-% und (Sn/Sb)O₂ von 20 Gew.-% bis 30 Gew.-% umfasst.

9. Zusammensetzung nach Anspruch 1, wobei der Füllstoff ein Mineralsubstrat auf der Basis von Titandioxid von Mikronpartikelgröße ist, das mit einer Zwischenschicht aus Siliciumdioxid und mit einer Oberflächenschicht auf der Basis von antimondotiertem Zinndioxid ((Sn/Sb)O₂) in Form von kugelförmigen Morphologiekristallen beschichtet ist.

10. Zusammensetzung nach Anspruch 9, wobei der Füllstoff eine Menge Titandioxid zwischen 70 Gew.-% und 80 Gew.-% und (Sn/Sb)O₂ von 20 Gew.-% bis 30 Gew.-% umfasst und bevorzugt eine Partikelgröße zwischen 0,5 Mikron und 15 Mikron bei einem Partikelvolumenprozentsatz unter 1 Mikron zwischen 15 % und 20 % und bei einer bimodalen Verteilungskurve, die einen Hauptmodus zwischen 5 und 7 Mikron und einen sekundären Modus zwischen 0,6 und 1 Mikron aufweist, aufweist.

11. Zusammensetzung nach einem der Ansprüche 1 bis 10, wobei der Füllstoff eine Wärmebehandlung bei einer Temperatur von mindestens 300 °C mindestens 1 Stunde lang durchgemacht hat.

12. Zusammensetzung nach einem der Ansprüche 1 bis 11, wobei das Fluorpolymer ein "nicht wärmeverarbeitbares" Fluorpolymer oder ein "wärmeverarbeitbares" Fluorpolymer ist, wobei das wärmeverarbeitbare Fluorpolymer bevorzugt aus der Gruppe ausgewählt ist umfassend: PVDF, ETFE, ECTFE, PCTFE, FEP, MFA und PFA und wobei das "nicht wärmeverarbeitbare" Fluorpolymer bevorzugt Polytetrafluorethylen (PTFE) umfasst oder daraus besteht.

13. Zusammensetzung nach einem der Ansprüche 1 bis 11, wobei das Fluorpolymer in Form eines Homopolymers von Tetrafluorethylen (TFE) oder in Form eines Copolymers vorliegt, das TFE-Monomer und ein oder mehrere weitere fluorierte Monomere, bevorzugt in Mengen gleich wie oder geringer als 1 Gew.-% mit Bezug auf das Gesamtgewicht von TFE (modifiziertem PTFE) umfasst.

14. Zusammensetzung nach einem der Ansprüche 1 bis 11, wobei das Fluorpolymere in Form eines Pulvers oder pelletisierten Pulvers und/oder in Form von Pellets vorliegt.

15. Zusammensetzung nach einem von Anspruch 1, wobei das Fluorpolymer in einem Gewichtsprozentsatz zwischen 75 Gew.-% und 85 Gew.-% vorliegt und der Füllstoff in einem Gewichtsprozentsatz zwischen 15 Gew.-% und 25 Gew.-% vorliegt.

16. Halbfertiges oder fertiges Produkt, das mindestens zum Teil aus einer Zusammensetzung nach einem der Ansprüche 1 bis 15 besteht und das bevorzugt mindestens einen Teil der Innenauskleidung von Durchführungen, Rohren, Anschlusstücken und Dichtungen bilden kann.

## Revendications

1. Composition en poudre ou en granulés comprenant au moins un polymère fluoré dans un pourcentage en poids compris entre 70 % en poids et 90 % en poids et une charge dans un pourcentage en poids compris entre 10 % en poids et 30 % en poids, dans laquelle ladite charge est un substrat à base de mica et de talc avec un revêtement à base de dioxyde d'étain dopé à l'antimoine (Sn/Sb)O₂ ou un substrat à base de dioxyde de titane avec un revêtement à base de dioxyde d'étain dopé à l'antimoine (Sn/Sb)O₂ ou un mélange desdites charges.

2. Composition selon la revendication 1, dans laquelle la charge est un substrat à base de mica et de talc avec un revêtement à base de dioxyde d'étain dopé à l'antimoine (Sn/Sb)O₂ **caractérisé par** le spectre FT-IR de la Fig. 1, dans laquelle ledit spectre FT-IR a été obtenu sur la charge sous forme de poudre avec l'instrument Spectrum One de Perkin Elmer, numéro de série 67979 selon les conditions suivantes : en ATR pour 16 balayages à 80 unités de force (pression) avec une pointe conique en utilisant une plaque de support d'échantillon de petite taille avec orifice réduit.

3. Composition selon la revendication 1 ou 2, dans laquelle la charge est un substrat à base de mica et de talc avec un revêtement à base de dioxyde d'étain dopé à l'antimoine (Sn/Sb)O₂ ayant une taille de particules comprise entre 1 micron et 20 microns, avec un pourcentage volumique de particules inférieur à 1 micron inférieur à 6 %, et avec une courbe de distribution ayant un mode compris entre 5 et 8 microns.

4. Composition selon l'une quelconque des revendications 1 à 3, dans laquelle ladite charge est un substrat à base de mica et de talc avec un revêtement à base de dioxyde d'étain dopé à l'antimoine (Sn/Sb)O₂ présentant à la fois une géométrie plane et sphérique, dans laquelle ledit revêtement à base de (Sn/Sb)O₂ ayant une structure tétragonale, avec des cristaux prismatiques, au moins partiellement maclés.

5. Composition selon la revendication 4, comprenant une quantité de 3MgO*6SiO₂*H₂O (silicate de magnésium hydraté/SiO₂) égale à 60-80 % en poids et une quantité de (Sn/Sb)O₂ égale à 20-40 % en poids.

6. Composition selon la revendication 1, dans laquelle la charge est un substrat à base de dioxyde de titane avec un revêtement à base de dioxyde d'étain dopé à l'antimoine (Sn/Sb)O₂ ayant une taille de particules comprise entre 0,5 micron et 25 microns, avec un pourcentage volumique de particules inférieur à 1 micron compris entre 20 % et 25 %, et avec une courbe de distribution bimodale ayant un mode principal compris entre 1 et 2 microns et un mode secondaire compris entre 6 et 8 microns.

7. Composition selon la revendication 6, dans laquelle la charge se présente sous forme de cristaux à morphologie en aiguilles, dans laquelle, de préférence, lesdits cristaux ont une longueur comprise entre environ 4 et 5,5 microns et une largeur comprise entre 0,25 et 0,30 micron, la couche de (Sn/Sb)O₂ ayant une épaisseur d'environ 3 nm.

8. Composition selon la revendication 6 ou 7, dans laquelle ladite charge comprend une quantité de dioxyde de titane comprise entre 70 % et 80 % en poids et de (Sn/Sb)O₂ comprise entre 20 % et 30 % en poids.

9. Composition selon la revendication 1, dans laquelle la charge est un substrat minéral à base de dioxyde de titane de taille micrométrique, revêtu d'une couche intermédiaire de dioxyde de silicium et d'une couche de surface à base de dioxyde d'étain dopé à l'antimoine (Sn/Sb)O₂, sous forme de cristaux à morphologie sphérique.

10. Composition selon la revendication 9, dans laquelle ladite charge comprend une quantité de dioxyde de titane comprise entre 70 % et 80 % en poids et de (Sn/Sb)O₂ comprise entre 20 % et 30 % en poids, et présente de préférence une taille de particules comprise entre 0,5 micron et 15 microns, avec un pourcentage volumique de particules inférieur à 1 micron compris entre 15 % et 20 %, et avec une courbe de distribution bimodale présentant un mode principal compris entre 5 et 7 microns et un mode secondaire compris entre 0,6 et 1 micron.

11. Composition selon l'une quelconque des revendications 1 à 10, dans laquelle la charge a subi un traitement thermique à une température d'au moins 300 °C pendant une durée d'au moins 1 heure.

12. Composition selon l'une quelconque des revendications 1 à 11, dans laquelle ledit polymère fluoré est un polymère fluoré « non thermotransformable » ou un polymère fluoré « thermotransformable », dans laquelle ledit polymère fluoré thermotransformable étant de préférence choisi parmi le groupe comprenant : PVDF, ETFE, ECTFE, PCTFE, FEP, MFA et PFA, et dans laquelle ledit polymère fluoré « non thermotransformable » comprenant ou consistant de préférence en polytétrafluoroéthylène (PTFE).

13. Composition selon l'une quelconque des revendications 1 à 11, dans laquelle ledit polymère fluoré se présente sous forme d'homopolymère de tétrafluoroéthylène (TFE), ou sous forme de copolymère comprenant le monomère TFE et un ou plusieurs autres monomères fluorés, de préférence en quantité inférieure ou égale à 1 % en poids par rapport au poids total de TFE (PTFE modifié).

14. Composition selon l'une quelconque des revendications 1 à 11, dans laquelle ledit polymère fluoré se présente sous forme de poudre ou de poudre granulée et/ou sous forme de granulés.

15. Composition selon l'une quelconque des revendications 1, dans laquelle ledit polymère fluoré est présent dans un pourcentage en poids compris entre 75 % en poids et 85 % en poids, et ladite charge est présente dans un pourcentage en poids compris entre 15 % en poids et 25 % en poids.

16. Produit semi-fini ou fini consistant au moins en partie en une composition selon l'une quelconque des revendications 1 à 15 et pouvant de préférence constituer au moins une partie du revêtement interne de conduits, tuyaux, raccords et joints.
